# FASCICULE DE BREVET EUROPEEN

(11) **EP 2 058 531 B1**
(45) Date de publication et mention de la délivrance du brevet: **05.09.2012**
(21) Numéro de dépôt: 08168514.1
(22) Date de dépôt: 06.11.2008
(51) Int. Cl.: F16B 5/10

(54) **Dispositif de fixation d'une première pièce sur une seconde pièce, telle qu'un panneau**
Vorrichtung zur Befestigung eines ersten Bauteils auf ein zweites Bauteil, wie beispielsweise eine Platte
Device for attaching a first part to a second part, such as a panel

(30) Priorité: 06.11.2007 FR 0758832
(43) Date de publication de la demande: 13.05.2009
(73) Titulaire: Lisi Automotive Rapid, 95650 Puiseux Pontoise (FR)
(72) Inventeur: OLIVIER, William, 92400 Courbevoie (FR); DA COSTA, Serge, 95400 Villiers-le-Bel (FR)
(74) Mandataire: Thinat, Michel

(56) Documents cités:
- DE-A1-102004 003 714
- DE-A1-102006 016 277

## Description

L'invention concerne un dispositif de fixation d'une première pièce sur une seconde pièce, tel qu'un panneau, du type selon le préambule de la revendication 1.

Un dispositif de fixation de ce type, susceptible d'être monté en aveugle, est connu du document DE 10 2006 016 277 A1.

L'invention a pour but de faciliter le montage du dispositif.

Pour atteindre ce but, l'invention propose un dispositif de fixation selon la revendication 1.

Selon une caractéristique de l'invention le dispositif comprend une cage en forme d'un U reposant par les extrémités libres sur le bord avant de l'orifice de la pièce de support et présentant une profondeur telle qu'à l'état verrouillé sur la pièce de support, la tête de la vis est en prise derrière le bord arrière de l'orifice, et est caractérisé en ce que l'embase de la cage comporte un orifice circulaire de réception rotative et amovible d'un embout cylindrique de la tête lors de l'insertion de cette tête dans la cage.

Selon une autre caractéristique de l'invention, le dispositif est caractérisé en ce que la cage comporte des pattes latérales de limitation du mouvement rotatif de la tête dans la position de verrouillage amovible de la tête dans la cage.

Selon encore une autre caractéristique de l'invention, le dispositif est caractérisé en ce que les branches de la cage comportent des pattes d'immobilisation axiale de la tête, qui s'étendent parallèlement à l'embase de la cage à une distance prédéterminée permettant l'engagement de la tête sous ces pattes dans la position de verrouillage de la tête dans la cage.

Selon encore une autre caractéristique de l'invention, le dispositif est caractérisé en ce que la cage comporte des moyens de retenue de la tête dans sa position verrouillée dans la cage.

Selon encore une autre caractéristique de l'invention, le dispositif est caractérisé en ce que les moyens de retenue comportent des languettes élastiques prévues sur l'embase de la cage.

Selon encore une autre caractéristique de l'invention, le dispositif est caractérisé en ce que les moyens de retenue comportent le bombage de l'embase de la cage.

Selon encore une autre caractéristique de l'invention, le dispositif est caractérisé en ce que la tête de la vis est déplaçable par rotation entre sa position d'insertion dans la cage et sa position verrouillée sous les pattes d'immobilisation axiale, lorsqu'une force de poussée axiale est exercée sur la vis, à l'encontre des moyens de retenue précités.

Selon encore une autre caractéristique de l'invention, le dispositif est caractérisé en ce que la cage présente une profondeur telle que la tête de la vis est rotative entre sa position verrouillée dans la cage et la position verrouillée de la vis sur la pièce de support, dans laquelle la tête est en appui sur le bord arrière de l'orifice de la pièce de support, lorsqu'une force axiale de poussée est exercée sur la vis à l'encontre des moyens de retenue précités.

Selon encore une autre caractéristique de l'invention, le dispositif est caractérisé en ce que les extrémités des branches de la cage, par lesquelles celle-ci prend appui sur le bord avant de l'orifice de la pièce de support forment un angle supérieur à 90° avec l'axe de la vis, et sont élastiques, et en ce que cette élasticité des extrémités produit une force de rappel s'ajoutant à celle exercée par les moyens de retenue précités.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- les figures 1A et 1B sont des vues en perspectives différentes d'un dispositif de fixation selon l'invention, montrant la vis engagée dans la cage et verrouillée sur sa pièce de support formée, dans l'exemple représenté, par un panneau ;
- la figure 2 est une vue en perspective de la cage du dispositif de fixation selon l'invention ;
- les figures 3 à 5 sont des vues respectivement en direction des flèches III, IV et V de la figure 2 ;
- la figure 6 est une vue illustrant le flan de tôle à partir duquel la cage selon la figure 2 est réalisée par pliage ;
- les figures 7 et 8 sont des vues respectivement latérales et de dessus d'une vis selon l'invention ;
- les figures 9A, 9B, 10A, 10B et 11A, 11B sont trois paires de vue en perspective qui montrent le montage de la tête de la vis dans la cage, dans trois positions différentes.

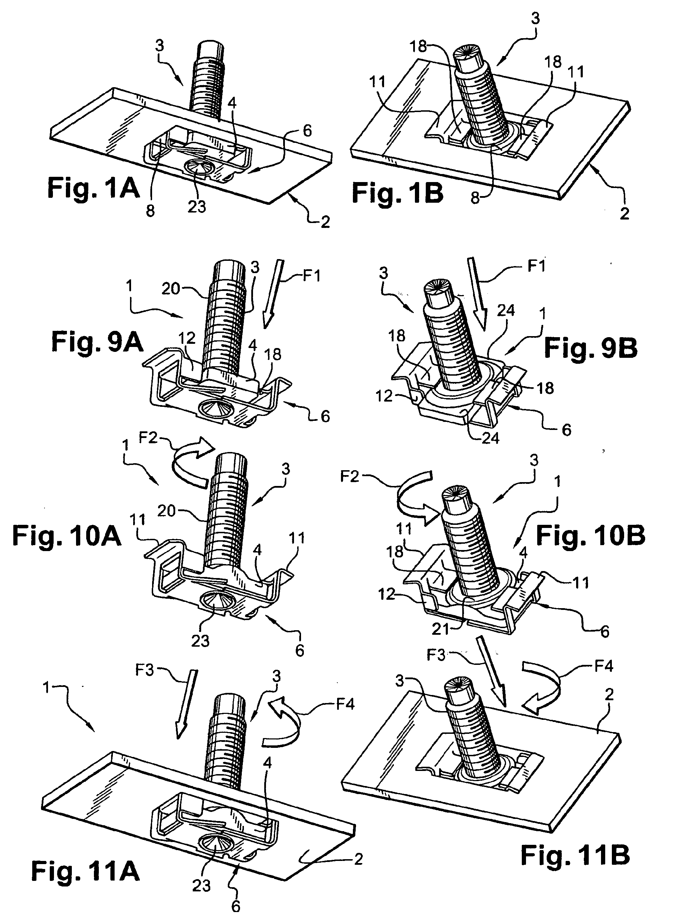

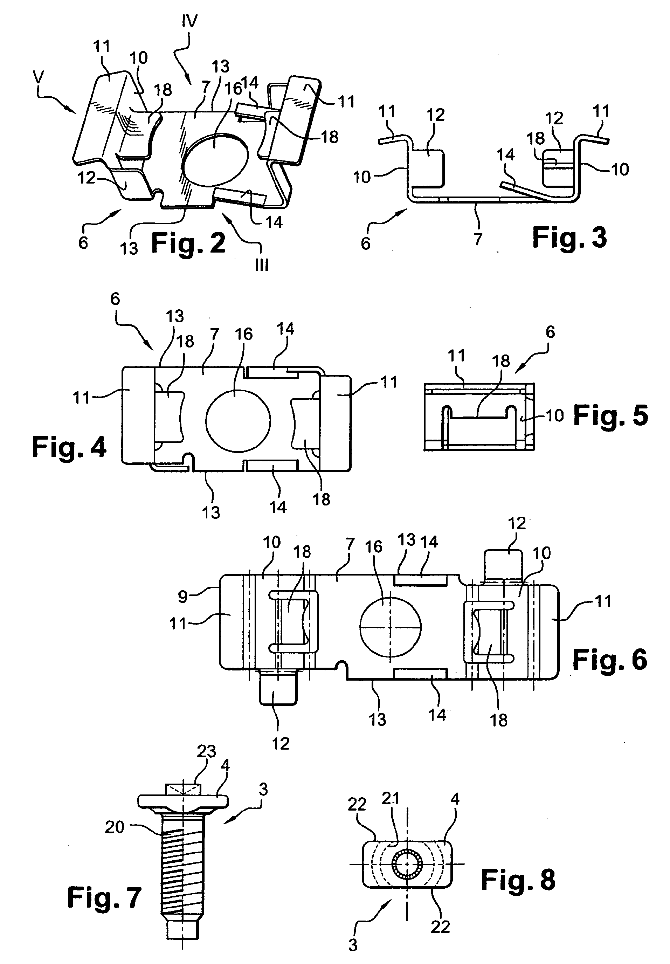

Comme le montre les figures 1 et 2, qui illustrent, à titre d'exemple, un dispositif 1 de fixation d'une première pièce non représentée sur une seconde pièce qui constitue la pièce de support notée 2 du dispositif 1, dans l'exemple représenté en forme d'un panneau, comprend une vis 3 dont la tête 4 présente une forme générale rectangulaire et une cage 6 en forme d'un U ayant une embase 7 de forme rectangulaire et engagée dans un orifice 8 de forme complémentaire, pratiquée dans la pièce support 2.

Conformément aux figures 2 à 6, la cage 6 selon l'invention est obtenue à partir d'un flan de tôle 9 par découpe et pliage appropriés. La cage 6 ainsi obtenue, qui présente la forme d'un U, comporte une embase rectangulaire 7 et des branches latérales 10 dont les extrémités sont repliées vers l'extérieur d'un angle légèrement supérieur à 90°, par exemple de 100°, pour former des rebords 11 légèrement inclinés vers le bas. Chaque branche 10 comporte une patte latérale 12 repliée autour d'une ligne de pliage coïncidant avec le bord latéral 13 de la branche, d'un angle de 90° pour former une butée de limitation de la rotation de la tête de la vis dans la cage, comme cela sera explicité plus loin. Les deux pattes 12 sont disposées diagonalement par rapport à l'embase 7. Celle-ci comporte deux languettes étroites 14 découpées au niveau des deux bords longitudinaux libres 13 de l'embase. Ces languettes sont repliées hors du plan de l'embase vers l'intérieur, de façon à être élastiquement déformables. Les deux languettes 14 sont disposées dans la même moitié de l'embase aux bords opposés. Elles sont situées à une certaine distance de la branche 10 correspondante et leurs extrémités libres s'étendent pratiquement jusqu'à la ligne médiane transversale de l'embase. Celle-ci comporte en outre dans sa zone centrale un évidement circulaire 16.

Selon une caractéristique essentielle de l'invention, chaque branche porte une patte 18 qui s'étend parallèlement à l'embase 7, à une distance prédéterminée de celle-ci. Les pattes 18 sont destinées à former des butées de retenue de la tête de la vis dans la cage à l'état préassemblé de l'ensemble formé par la vis et la cage, comme cela sera également expliqué plus loin. Les pattes 18 sont découpées dans les branches et ensuite repliées hors du plan de celles-ci, selon un angle de 90° autour d'une ligne de pliage parallèle à l'embase. Il est à noter que l'écart entre le bord avant libre des deux pattes 18 est supérieur à la largeur de la tête 4 de la vis.

Les figures 7 et 8 illustrent une vis 3 selon l'invention. Celle-ci porte à l'extrémité libre de son fût fileté 20 un embout cylindrique non fileté. La tête 4 présente une forme générale rectangulaire dont les dimensions correspondent à celle de l'embase de la cage. Du côté du fût 20, la tête 4 comporte un décrochement 21 coaxial autour du fût, dont le diamètre est supérieur à la largeur de la tête de façon que, au niveau des bords longitudinaux de la tête, ce décrochement est aplati et coïncide avec les faces longitudinales latérales 22. De l'autre côté, la tête comporte un embout cylindrique 23 coaxial au fût 20 et destiné à s'engager dans l'orifice central 16 de l'embase 7 de la cage 6. La face frontale libre présente une empreinte centrale.

Les figures 9A, 9B ; 10A, 10B ; 11A, 11B illustrent trois étapes de montage du dispositif de fixation 1 selon l'invention.

Les figures 9A et 9B montrent l'étape de mise en place de la vis 3 dans la cage 6. A cette fin, la vis est introduite dans la cage en direction de la flèche F1 de façon que l'embout 23 à la tête de la vis s'engage dans l'orifice central 16 de la cage. La vis est orientée angulairement de façon que l'axe longitudinal de la tête soit perpendiculaire à l'axe longitudinal de la cage, les extrémités 24 s'engageant entre les deux pattes latérales 12 de limitation de la rotation de la tête. Puis, en exerçant une force en direction de la flèche F1, la tête 4 est poussée vers l'embase 7 à l'encontre des languettes élastiques de rappel 14 de l'embase et la force de rappel produite par la forme légèrement bombée de cette dernière et la vis est tournée dans le sens de la flèche F2, conformément aux figures 10A et 10B, d'un angle de 90°, jusqu'à ce que les faces longitudinales 22 de la tête viennent en appui contre les pattes latérales 12 de l'embase. La hauteur de la tête 4 et la distance des pattes de retenues axiales 18 de l'embase, de cette dernière, sont choisies de façon que lors de la rotation de la vis, sous l'effet de la force axiale de poussée susmentionnée, les extrémités 24 de la tête viennent en prise sous les pattes 18. Dans cette position la vis est verrouillée axialement dans la cage et les forces de réaction produites par l'élasticité des languettes 14 et le bombage de l'embase, en appliquant la tête sous les pattes 18, assurent une immobilisation en rotation suffisante de la vis dans la cage pour que cette dernière ne puisse pas se dégager accidentellement de celle-ci.

Dans cette position de l'ensemble ainsi préassemblé formée par la vis et la cage, dans laquelle les bords longitudinaux 22 de la tête sont parallèles aux bords longitudinaux de l'embase, mais légèrement en retrait, la cage, avec la vis verrouillée dans elle, est introduite dans l'orifice 8 de forme complémentaire pratiqué dans la pièce de support 2, comme cela est illustré par la flèche F3 sur les figures 11A et 11B. Il est à noter que la profondeur de la cage est choisie de telle façon que, dans la position d'insertion de la cage dans l'orifice, en exerçant une force de poussée axiale dans la direction de la flèche F3, il est possible de tourner la vis dans la direction de la flèche F4, d'un angle de 90° pour que les extrémités libres 24 de sa tête 4 puissent venir en prise derrière le bord arrière de l'orifice 16 dans la position illustrée aux figures 1A et 1B. Lorsque la force de poussée cesse, les languettes élastiques 14, le bombage de l'embase et les rebords 11 légèrement inclinés des branches 10 de la cage empêchent une rotation de la vis dans la direction opposée à la flèche F4 en raison de la pression de contact entre la tête de la vis et des bords de l'orifice 16, la rotation dans la direction de la flèche F4 étant interdite par les pattes latérales 12.

Dans cette position angulaire, la vis est verrouillée sur la pièce de support 2, par l'intermédiaire de la cage 6. Mais la vis peut être démontée en exerçant une force de poussée en direction de la flèche F3 et en tournant, tout en maintenant la force de poussée axiale, la vis dans la direction opposée à celle de la flèche F4 pour que la tête de la vis revienne dans la position représentée aux figures 11A et 11B. Dans cette position, la cage, avec la vis toujours verrouillée dans elle, peut être retirée de l'orifice du support 2. En exerçant maintenant une force de poussée axiale en direction de la flèche F1 à l'encontre des languettes élastiques 14, la force de rappel produite par le bombage de l'embase et les rebords 10, la vis peut être tournée dans la direction opposée à la flèche F2 puisque les extrémités 24 de la tête ne sont plus pressées contre les pattes horizontales 18 de la cage. Ainsi, la vis peut être ramenée dans sa position angulaire selon les figures 9A et 9B, qui permettent le retrait de la vis de sa cage.

Ainsi, l'invention permet, d'une façon simple et sans utilisation d'outils spécifiques de monter tout d'abord la vis dans la cage et ensuite la cage avec la vis retenue dans celle-ci dans l'orifice de la pièce de support, d'une part, et, d'autre part, d'une façon aussi simple et sans outils spécifiques, le démontage de l'ensemble formé par la vis et la cage de ce support et ensuite de la vis de sa cage.

## Revendications

1. Dispositif de fixation d'une première pièce sur une seconde pièce (2), tel qu'un panneau, du type comprenant une vis (3) susceptible d'être montée en aveugle sur la seconde pièce formant pièce de support, par l'intermédiaire d'une cage (6) s'engageant de façon non rotative dans un orifice (8) de forme complémentaire pratiquée dans la seconde pièce, la vis (3) étant amoviblement verrouillable dans la cage (6) et la cage (6), avec la vis (3) retenue dans la cage, étant verrouillée dans la seconde pièce (2), de façon amovible, **caractérisé en ce que** la tête (4) de la vis est reçue dans la cage (6) et mobile dans celle-ci entre une position d'insertion et une position verrouillée dans la cage (6) permettant l'insertion de la cage (6) retenant la vis (3) dans ledit orifice et la cage et la tête (4) de la vis est configurée de façon que, après l'insertion de la cage dans ledit orifice, l'ensemble formé par la cage (6) et la vis (3) puisse être verrouillé sur la seconde pièce (2) par rotation de la vis (3) dans une position dans laquelle la tête (4) de la vis vienne en prise derrière le bord arrière de l'orifice de la seconde pièce (2).

2. Dispositif selon la revendication 1, comprenant une cage (6) en forme d'un U reposant par les extrémités libres sur le bord avant de l'orifice (8) la pièce de support et présentant une profondeur telle qu'à l'état verrouillé sur la pièce de support, la tête (4) de la vis (3) est en prise derrière le bord arrière de l'orifice, **caractérisé en ce que** l'embase (7) de la cage (6) comporte un orifice circulaire (16) de réception rotative et amovible d'un embout cylindrique (23) de la tête (4) lors de l'insertion de cette tête dans la cage.

3. Dispositif selon la revendication 2, **caractérisé en ce que** la cage (6) comporte des pattes latérales (12) de limitation du mouvement rotatif de la tête (4) dans la position de verrouillage amovible de la tête dans la cage.

4. Dispositif selon l'une des revendications 2 ou 3, **caractérisé en ce que** les branches (10) de la cage (6) comportent des pattes (18) d'immobilisation axiale de la tête (4), qui s'étendent parallèlement à l'embase (7) de la cage (6) à une distance prédéterminée permettant l'engagement de la tête sous ces pattes dans la position de verrouillage de la tête dans la cage.

5. Dispositif selon la revendication 4, **caractérisé en ce que** la cage (6) comporte des moyens de retenue de la tête (4) dans sa position verrouillée dans la cage (6).

6. Dispositif selon la revendication 5, **caractérisé en ce que** les moyens de retenue comportent des languettes élastiques (14) prévues sur l'embase (7) de la cage (6).

7. Dispositif selon l'une des revendications 5 ou 6, **caractérisé en ce que** les moyens de retenue comportent le bombage de l'embase (7) de la cage (6).

8. Dispositif selon l'une des revendications 5 à 7, **caractérisé en ce que** la tête (4) de la vis (3) est déplaçable par rotation entre sa position d'insertion dans la cage (6) et sa position verrouillée sous les pattes (18) d'immobilisation axiale, lorsqu'une force de poussée axiale est exercée sur la vis, à l'encontre des moyens de retenue précités.

9. Dispositif selon l'une des revendications 3 à 8, **caractérisé en ce que** la cage (6) présente une profondeur telle que la tête (4) de la vis (3) est rotative entre sa position verrouillée dans la cage (6) et la position verrouillée de la vis sur la pièce de support (2), dans laquelle la tête (4) est en appui sur le bord arrière de l'orifice (8) de la pièce de support, lorsqu'une force axiale de poussée est exercée sur la vis à l'encontre des moyens de retenue précités.

10. Dispositif selon la revendication 9, **caractérisé en ce que** les extrémités (11) des branches (10) de la cage, par lesquelles celle-ci prend appui sur le bord avant de l'orifice (8) de la pièce de support (2) forment un angle supérieur à 90° avec l'axe de la vis, et sont élastiques, et **en ce que** cette élasticité des extrémités (11) produit une force de rappel s'ajoutant à celle exercée par les moyens de retenue précités.

## Claims

1. A device for attaching a first part to a second part (2), such as a panel, comprising a screw (3) that can be mounted blindly on the second part forming a support part, using a cage (6) engaging rotatably in an opening (8) with a complementary shape formed in the second part (1), the screw (3) being removably lockable in the cage (6) and the cage (6), with the screw (3) retained in the cage, being locked in the second part (2), removably, **characterized in that** the head (4) of the screw is received in the cage (6) and movable therein between an insertion position and a position locked in the cage (6) allowing the insertion of the cage (6) retaining the screw (3) in said opening and the cage, and the head (4) of the screw (3) is configured so that, after the cage is inserted into said opening, the assembly formed by the cage (6) and the screw (3) can be locked on the second part (2) by rotating the screw (3) into a position wherein the head (4) of the screw engages behind the rear edge of the opening of the second part (2).

2. The device according to claim 1, comprising a U-shaped cage (6) resting by the free ends on the front edge of the opening (8) of the support part and having a depth such that in the state locked on the support part, the head (4) of the screw (3) is engaged behind the rear edge of the opening, **characterized in that** the base (7) of the cage (6) includes a circular opening (16) for rotatably and removably receiving a cylindrical tip (23) of the head (4) when that head is inserted into the cage.

3. The device according to claim 2, **characterized in that** the cage (6) includes lateral pads (12) for limiting the rotating movement of the head (4) in the removable locking position of the head in the cage.

4. The device according to one of claims 2 or 3, **characterized in that** the branches (10) of the cage (6) include pads (18) for axially immobilizing the head (4), which extend parallel to the base (7) of the cage (6) at a predetermined distance allowing the head to be engaged under those pads in the locking position of the head in the cage.

5. The device according to claim 4, **characterized in that** the cage (6) includes means for retaining the head (4) in its position locked in the cage (6).

6. The device according to claim 5, **characterized in that** the retaining means include elastic tabs (14) provided on the base (7) of the cage (6).

7. The device according to one of claims 5 or 6, **characterized in that** the retaining means include the bowing of the base (7) of the cage (6).

8. The device according to one of claims 5 to 7, **characterized in that** the head (4) of the screw (3) is rotatable between its position inserted in the cage (6) and its position locked under the axial immobilization pads (18), when an axial thrust is exerted on the screw, against the aforementioned retaining means.

9. The device according to one of claims 3 to 8, **characterized in that** the cage (6) has a depth such that the head (4) of the screw (3) can be rotated between its position locked in the cage (6) and the position of the screw locked on the support part (2), wherein the head (4) bears on the rear edge of the opening (8) of the support part, when an axial thrust is exerted on the screw against the aforementioned return means.

10. The device according to claim 9, **characterized in that** the ends (11) of the branches (10) of the cage, by which the latter bears on the front edge of the opening (8) of the support part (2), form an angle greater than 90° with the axis of the screw, and are elastic, and **in that** this elasticity of the ends (11) produces a return force added to that exerted by the aforementioned retaining means.

## Patentansprüche

1. Vorrichtung zur Befestigung eines ersten Bauteils auf ein zweites Bauteil (2) wie beispielsweise eine Platte des Typs umfassend eine Schraube (3), die blind auf dem zweiten Bauteil montiert werden kann, das ein Trägerbauteil bildet, mit Hilfe eines Gehäuses (6), das auf nicht drehende Weise in eine Öffnung (8) eingreift, die eine komplementäre Form aufweist, die im zweiten Bauteil durchgeführt ist, wobei die Schraube (3) abnehmbar in dem Gehäuse (6) verriegelt ist und das Gehäuse (6), wobei die Schraube (3) im Gehäuse zurückgehalten wird, im zweiten Bauteil (2) auf abnehmbare Weise verriegelt ist, **dadurch gekennzeichnet, dass** der Kopf (4) der Schraube im Gehäuse (6) aufgenommen und in diesem zwischen einer Einführungsposition und einer verriegelten Position im Gehäuse (6) beweglich ist, die die Einführung des Gehäuses (6), das die Schraube (3) zurückhält, in die Öffnung ermöglicht, und das Gehäuse und der Kopf (4) der Schraube so konfiguriert sind, dass nach der Einführung des Gehäuses in die Öffnung die Einheit, die vom Gehäuse (6) und der Schraube (3) gebildet wird, auf dem zweiten Bauteil (2) durch Drehung der Schraube (3) in eine Position verriegelt werden kann, in der der Kopf (4) der Schraube hinter den hinteren Rand der Öffnung des zweiten Bauteils (2) eingreift.

2. Vorrichtung nach Anspruch 1, umfassend ein Gehäuse (6) in Form eines U, das durch die freien Enden auf dem vorderen Rand der Öffnung (8) des Stützbauteils aufliegt und eine derartige Tiefe aufweist, dass im verriegelten Zustand auf dem Stützbauteil der Kopf (4) der Schraube (3) hinter dem hinteren Rand des Gehäuses eingreift, **dadurch gekennzeichnet, dass** die Basis (7) des Gehäuses (6) eine ringförmige Öffnung (16) zur drehenden und abnehmbaren Aufnahme eines zylindrischen Ansatzstücks (23) des Kopfes (4) bei der Einführung dieses Kopfes in das Gehäuse umfasst.

3. Verfahren nach Anspruch 2, **dadurch gekennzeichnet, dass** das Gehäuse (6) seitliche Laschen (12) zur Begrenzung der drehenden Bewegung des Kopfes (4) in der abnehmbaren Verriegelungsposition des Kopfes im Gehäuse umfasst.

4. Vorrichtung nach einem der Ansprüche 2 oder 3, **dadurch gekennzeichnet, dass** die Arme (10) des Gehäuses (6) Laschen (18) zur axialen Immobilisierung des Kopfes (4) umfassen, die sich parallel zur Basis (7) des Gehäuses (6) in einem vorbestimmten Abstand erstrecken, der den Eingriff des Kopfes unter diesen Laschen in der Verriegelungsposition des Kopfes im Gehäuse ermöglicht.

5. Vorrichtung nach Anspruch 4, **dadurch gekennzeichnet, dass** das Gehäuse (6) Mittel zum Rückhalt des Kopfes (4) in seiner Verriegelungsposition im Gehäuse (6) umfasst.

6. Vorrichtung nach Anspruch 5, **dadurch gekennzeichnet, dass** die Rückhaltemittel elastische Zungen (14) umfassen, die auf der Basis (7) des Gehäuses (6) vorgesehen sind.

7. Vorrichtung nach einem der Ansprüche 5 oder 6, **dadurch gekennzeichnet, dass** die Rückhaltemittel die Wölbung der Basis (7) des Gehäuses (6) umfassen.

8. Vorrichtung nach einem der Ansprüche 5 bis 7, **dadurch gekennzeichnet, dass** der Kopf (4) der Schraube (3) durch Drehung zwischen seiner Position der Einführung in das Gehäuse (6) und seiner verriegelten Position unter den Laschen (18) zur axialen Immobilisierung verschiebbar ist, wenn eine axiale Druckkraft auf die Schraube gegen die oben angeführten Rückhaltemittel ausgeübt wird.

9. Vorrichtung nach einem der Ansprüche 3 bis 8, **dadurch gekennzeichnet, dass** das Gehäuse (6) eine derartige Tiefe aufweist, dass der Kopf (4) der Schraube (3) zwischen seiner verriegelten Position im Gehäuse (6) und der verriegelten Position der Schraube auf dem Stützbauteil (2) drehbar ist, wobei der Kopf (4) auf dem hinteren Rand der Öffnung (8) des Stützbauteils aufliegt, wenn eine axiale Druckkraft auf die Schraube gegen die oben angeführten Rückhaltemittel ausgeübt wird.

10. Vorrichtung nach Anspruch 9, **dadurch gekennzeichnet, dass** die Enden (11) der Arme (10) des Gehäuses, durch die dieses auf dem vorderen Rand der Öffnung (8) des Stützbauteils (2) aufliegt, einen Winkel von mehr als 90° mit der Achse der Schraube bilden und elastisch sind, und dadurch, dass diese Elastizität der Enden (11) eine Rückhaltekraft bildet, die sich zu derjenigen hinzufügt, die von den oben angeführten Rückhaltemitteln ausgeübt wird.
